# EUROPEAN PATENT SPECIFICATION

(11) **EP 4 307 969 B1**
(45) Date of publication and mention of the grant of the patent: **27.05.2026**
(21) Application number: 22706682.6
(22) Date of filing: 21.02.2022
(51) Int. Cl.: A47J 31/06, A47J 31/36, A47J 31/44

(54) **CAPSULE-HOLDER DEVICE FOR BEVERAGE PREPARATION MACHINES**
KAPSELHALTERVORRICHTUNG FÜR GETRÄNKEZUBEREITUNGSMASCHINEN
DISPOSITIF PORTE CAPSULE POUR MACHINES DE PREPARATION DE BOISSONS

(30) Priority: 17.03.2021 IT 202100006398
(43) Date of publication of application: 24.01.2024
(73) Proprietor: Luigi Lavazza S.p.A., 10152 Torino (IT)
(72) Inventor: COCCO, Alessandro, 10152 Torino (IT)
(74) Representative: Buzzi, Notaro & Antonielli d'Oulx S.p.A.
(86) International application number: PCT/IB2022/051511
(87) International publication number: WO 2022/195376

(56) References cited:
- EP-A2- 2 090 204
- CN-U- 201 469 004
- US-A- 5 762 987

## Description

### Technical Field

The present invention refers in general to machines for the preparation of beverages, in particular espresso coffee, and has been developed with particular attention being paid to the devices aimed at allowing the use of capsules also on preparation machines mainly conceived for preparation of beverages starting from powdery or granular precursors in bulk form. The invention has a preferred application in the field of professional-type machines, for example for use in bars and other catering premises.

### Background art

Preparation of espresso coffee on preparation machines is usually carried out by loading a dose of coffee in powder form into a corresponding preparation chamber. The coffee powder is passed through by stream of water, such that the beverage obtained by the percolation is dispensed in a container, such as a cup. Hence, in these machines the precursor of the beverage is supplied in bulk form.

In a first type of solution, the preparation machine includes a container for storage of a certain amount of coffee beans, and integrates a grinding arrangement, to grind the beans and provide a dose of powder required for the preparation process of the espresso coffee. At the exit of the grinding arrangement, the dose of coffee powder reaches the preparation chamber, and then is crossed by the hot water fed by means of a boiler or the like, with the espresso coffee that is dispensed from the chamber via a corresponding nozzle. These machines - often identified as *bean-to-cup* machines - are typically intended for household use.

In professional-type machines, for example for use in bars and other catering premises, the preparation chamber is partially defined in a so-called filter-holder device, comprising a filtering cup in which the dose of coffee is manually loaded by an operator. The dose is usually withdrawn from a grinding and dosing apparatus, suitable for storing a relatively large amount of coffee beans and configured to selectively dispense single doses of the coffee powder. The filter-holder device of the preparation machine is usually configured in the form of a grippable arm and is configured for coupling with a dispensing unit of the preparation machine, usually by means of a bayonet coupling, in order to define the preparation chamber. After the filter-holder arm containing the dose of coffee has been coupled to the dispensing unit, the operator can control starting of the preparation cycle, during which the hot water supplied via the dispensing unit passes through the dose of coffee, with the espresso coffee resulting from the percolation that is dispensed through a passage of the filter-holder arm, to an underlying container, such as a cup.

Preparation machines, mainly for household use, are also known, designed to be supplied with pre-packaged capsules, each containing a respective dose of coffee powder. In these cases, the user is called upon to load one such capsule into the machine (except in the case of machines equipped with automated capsule loaders), which is fed to the preparation chamber. This chamber is usually conceived in two parts, at least one of which can be moved relative to the other, in order to be able to assume an opening position and a closing position. In the opening position a new capsule is loaded into one of the two parts of the chamber (and a previously treated exhausted capsule is evacuated from that part of the chamber), while in the closing position the hot water is fed inside the chamber, in order to pass through the coffee contained in the capsule, and provide the beverage at outlet. The pre-packaged capsule can be sealed or unsealed: particularly in the first case, the two parts of the preparation chamber are usually provided with their respective piercing arrangements, to pierce the capsule at its inlet end, for the introduction of hot water, and its outlet end, for the outflow of the espresso coffee. Substantially similar methods can be used for the purpose of preparing other beverages using capsules, staring from powdery or granular precursors, possibly also of a soluble type: this is the case, for example, of preparations based on tea, chocolate, barley, ginseng, infusions and herbal teas, preparations for soups, etc.

Due to a number of reasons, for example related to needs of hygiene and preservation of the coffee powder, the use of pre-packaged capsules has also been proposed on machines equipped with filter-holder arms, that is, machines traditionally designed for the preparation of espresso coffee starting from a dose of pulverulent or granular precursor in bulk form. These solutions usually involve the use of capsule-holder devices configured substantially as the aforementioned filter-holder arms, but which define a chamber prearranged for receiving a capsule, instead of a bulk dose of the powder precursor.

In the event that the device is designed for use with sealed capsules, its receiving chamber is provided, at the bottom thereof, with a piercing arrangement, provided with tips configured to pierce the outlet end of the capsule. On the other hand, the dispensing unit of the preparation machine is also provided with a respective piercing arrangement, with tips configured to pierce the inlet end of the capsule. A solution of this type is known from WO 2020/089830 A1.

Even in solutions of the type indicated, the means that allow the capsule-holder device to be coupled to the dispensing unit of the preparation machine are of the bayonet type. Such a coupling system implies an axial movement of the capsule-holder device relative to the dispensing unit, in order to fit the cam couplings of the former into the respective seats of the latter, as well as subsequent angular movement of the capsule-holder device relative to the dispensing unit, in order to cause sliding of the aforementioned cam couplings on inclined ramps of the bayonet system, and thereby tighten the two parts together.

In the solution according to WO 2020/089830 A1 the aforementioned axial movement can be exploited to cause piercing of the inlet wall of the capsule contained in the capsule-holder device, by means of the tips of the piercing arrangement associated with the dispensing unit of the preparation machine. On the other hand, piercing of the outlet wall of the capsule is obtained during preparation of the beverage, taking advantage of the deformation of this outlet wall: in practice, due to the introduction of hot water under pressure into the capsule by the dispensing unit, via the holes obtained by the upper piercing arrangement, the exit wall of the capsule deforms outwards, so as to press on the tips of the lower piercing arrangement, and thus be pierced, in order to allow the beverage outflow.

However, it was found that occasionally the exit wall of the capsule can also be partially pierced by the tips of the piercing arrangement which is inside the capsule-holder device, already during the aforementioned axial movement of the device, or these tips can in any case engage with the exit wall of the capsule, even without piercing it completely. This can happen, for example, in the case of the use of capsules which have axial dimensions that are even slightly greater than those for which the filter-holder device is conceived, or even simply due to an excessive manual push of the capsule inside the receiving chamber of the capsule-holder device.

During the subsequent angular movement imparted to the capsule-holder, the fact that the capsule is constrained by the upper and lower tips of the two piercing arrangements has the effect of causing a torsion of the capsule itself, which can cause, for example, an excessive tearing of the inlet wall, and possibly also of the outlet wall, if already perforated or partially perforated. Excessive tearing may result in poor quality of the infusion, due to too rapid passage of hot water through the precursor of the beverage (i.e., a reduced contact time with it) and/or an unwanted leakage of precursor residues from the capsule.

US 5 762 987 A discloses a preparation machine having an upper part provided with an assembly for piercing the upper surface of a sachet and injecting water thereinto, and a lower part with protruding and recessed elements, and outflow holes. Each of said parts defines substantially half of a cavity determining the final shape of the sachet, and the parts are pressed together by auxiliary fastening members secured to the upper part and the lower part, respectively.

CN 201 469 004 U discloses a capsule-holder defining a cavity, with a capsule bottom piercing piece at a lower part of a cavity and a capsule piercing cover at the top of the cavity, and movable for closing the cavity after a capsule has been introduced thereinto. The capsule piercing cover is provided with upper piercing needles and upper through holes, and the capsule bottom piercing piece is provided with lower piercing needles and lower through holes.

### Aim and summary

In its general terms, the present invention aims to obtain a capsule-holder device of the type indicated that is free from the drawback indicated above. A further aim of the present invention is to obtain one such capsule-holder device of simple and cheap construction, but which is able to allow high qualitative performance to be obtained, for the purpose of preparing a beverage.

At least one of the above aims is achieved, according to the invention, by a capsule-holder device according to claim 1.

The claims form an integral part of the technical teaching provided herein in relation to the invention.

### Brief description of the drawings

Further aim, characteristics and advantages of the invention will result from the following description, made with reference to the attached schematic drawings, provided by way of non-limiting example only, wherein:
- Figures 1 and 2 are a side elevation view and a view from below, respectively, of a capsule-holder device according to possible embodiments;
- Figure 3 is an exploded view of a part of a capsule-holder device according to possible embodiments, together with an upper perforation element configured for mounting on a dispensing unit of a beverage preparation machine;
- Figures 4, 5 and 6 are a perspective view, a view from below and a sectional view of a container body of a receiving assembly of a capsule-holder device according to possible embodiments;
- Figure 7 is a sectional view of a first annular sealing element of a receiving assembly of a capsule-holder device according to possible embodiments;
- Figures 8 and 9 are a view from below and a sectional view of a second annular sealing element of a receiving assembly of a capsule-holder device according to possible embodiments;
- Figures 10 and 11 are a view from below and a sectional view of an annular component of a receiving assembly of a capsule-holder device according to possible embodiments;
- Figures 12, 13, 14 and 15 are a side view, a sectional view, a view from below and a perspective view of a sleeve of a receiving assembly of a capsule-holder device according to possible embodiments;
- Figures 16 and 17 are a view from above and a sectional view of a further annular sealing element of a receiving assembly of a capsule-holder device according to possible embodiments;
- Figures 18, 19 and 20 are a view from below, a first sectional view and a second sectional view of a locking member of a receiving assembly of a capsule-holder device according to possible embodiments;
- Figures 21, 22 and 23 are a perspective view, a sectional view and view from above of a perforation arrangement of a receiving assembly of a capsule-holder device according to possible embodiments;
- Figure 24 is a sectional view of a receiving assembly of a capsule-holder device according to possible embodiments, comprising the components of Figures 4-23;
- Figures 25, 26 and 27 are a perspective view, a view from above and a sectional view of an upper perforation element configured for mounting on a dispensing unit of a beverage preparation machine, according to possible embodiments;
- Figure 28 is a detail of Figure 27;
- Figure 29 is a perspective view of an upper perforation element, similar to that of Figures 25-27, according to a possible variant embodiment;
- Figures 30 and 31 are a view from above and a perspective view of a micro-perforated plate that can be associated with an upper perforation element of the type shown in Figures 25-27;
- Figure 32 is a view on a larger scale than a portion of Figure 30;
- Figure 33 is a perspective view of a generic dispensing unit of a beverage preparation machine;
- Figure 34 is a schematic representation intended to exemplify a possible way of mounting an upper perforation element of the type shown in Figures 25-27 and a micro-perforated plate of the type shown in Figures 30-31 on a dispensing unit of the type shown in Figure 33; and
- Figures 35 and 36 are views similar to those of Figures 3 and 24, respectively, of a device according to possible alternative embodiments.

### Description of preferred embodiments

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment", "in one embodiment, "in various embodiments", and the like, that may be present in different points of this description, do not necessarily refer to one and the same embodiment. Furthermore, particular conformations, structures, or characteristics defined in the framework of the present description may be combined in any adequate way in one or more embodiments, that may even differ from the ones represented. The reference numbers and spatial references (such as "upper", "lower" "top", "bottom", etc.) used herein are merely for convenience and hence do not define the sphere of protection or the scope of the embodiments. The same reference numbers are used in the figures to indicate similar or technically equivalent elements.

In the following description and in the attached claims, and unless otherwise specified, terms such as "precursor" shall be understood as referring indifferently to a single substance or to a mixture of several substances.

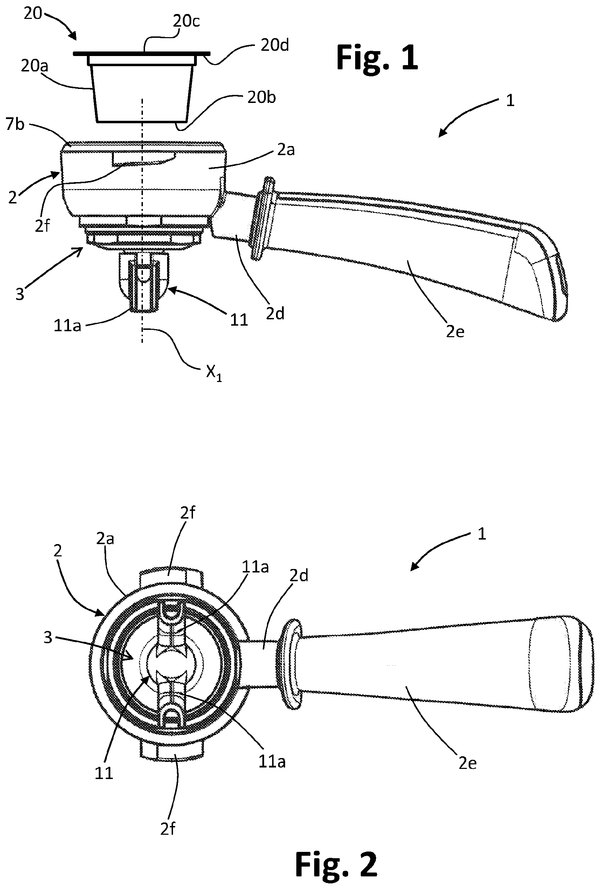

Referring initially to Figures 1 and 2, reference 1 designates as a whole a capsule-holder device for a machine for the preparation of beverages, according to possible embodiments.

The device 1, hereinafter also identified simply as "capsule-holder", comprises an annular supporting body 2, preferably formed with metal material, having a central axis X₁. The supporting body 2 is axially hollow, to partially accommodate inside it a receiving assembly, indicated as a whole with 3, described below, and intended to receive a capsule 20 of a conception known in itself.

The capsule 20 can, for example, have an overall shape substantially as a tray or a small cup, inside which there is a dose of the precursor of the beverage, which here is assumed to be coffee powder. In general, the body of the capsule 20 has a side or peripheral wall 20a, a bottom wall 20b that closes the body itself at one end of the side wall 20a, and a closing wall 20c, which closes the body at the end opposite to the back wall 20b. The body of the capsule 20 can be formed with plastic or metal material, with the wall 20c which consists of a sealing foil, sealingly connected to the side wall 20a, in particular at an outer annular flange 20d, that surrounds the mouth part of the body. In the exemplified case, the body of capsule 20 has a cup or tray conformation, that diverges starting from the bottom wall 20b towards the end closed by the wall 20c: this divergent shape is a truncated conical shape, which is however not essential, as the capsule 20 may have different overall shapes, according to the known technique. Referring to the example shown in figure 1, the walls 20b and 20c obtain the outlet end and the inlet end of the capsule 20, respectively.

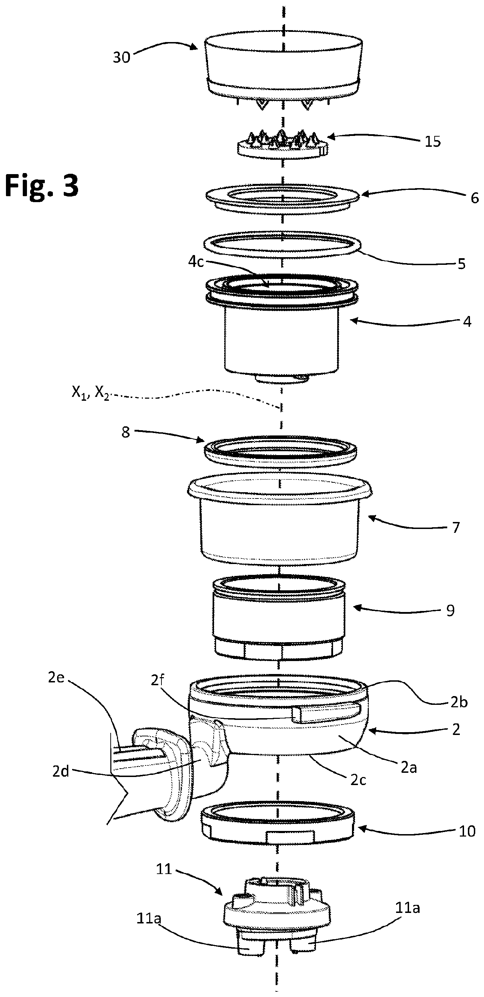

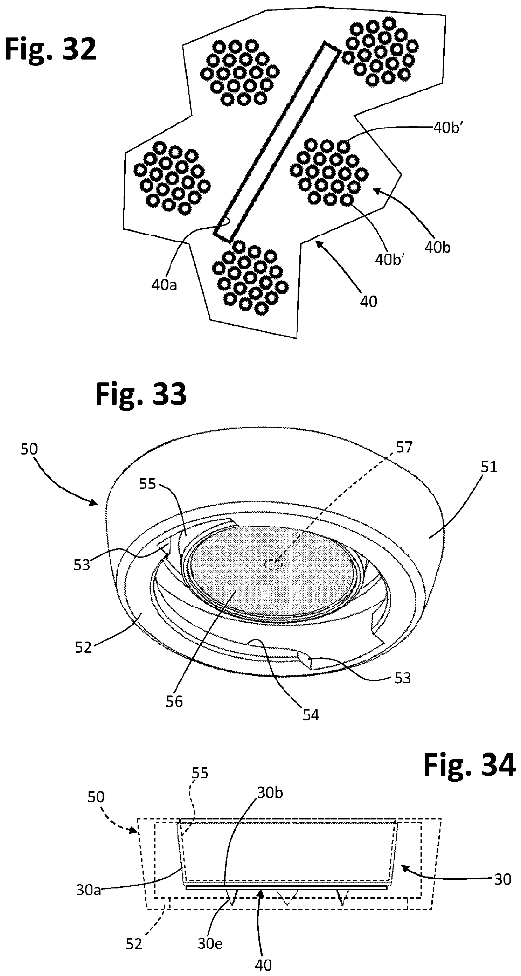

Referring also to figure 3, the supporting body 2 has a peripheral wall 2a with an upper edge 2b and a lower edge 2c, the first having preferably a diameter at least slightly larger than the second. The peripheral wall 2a has a lateral attachment 2d for fixing a handle or grip 2e, as well as means for coupling with a hot water dispensing unit belonging to a preparation machine, for example a dispensing unit of the type shown in figure 33.

The aforesaid coupling means are of a type which presuppose at least one angular movement of the supporting body 2 about the respective central axis X₁, for the purposes of the releasable engagement with the aforesaid dispensing unit. Preferably the above means are of the bayonet coupling type, and therefore include at least two pins or cam elements, which protrude radially outwards from the peripheral wall 2a, preferably in diametrically opposite positions; on the other hand, the dispensing unit, for example the one indicated with 50 in figure 33, has two insertion seats 53, in which the pins 2f can be inserted by means of an axial movement of the body 2. Subsequently, by imparting an angular movement to body 2 about its central axis X₁, a lower surface of the pins 2e slides on an inclined upper surface of two corresponding ramps 54 each facing a respective insertion seat 53, so as to tighten the body 2 with respect to the assembly 50, all according to a technique known in itself.

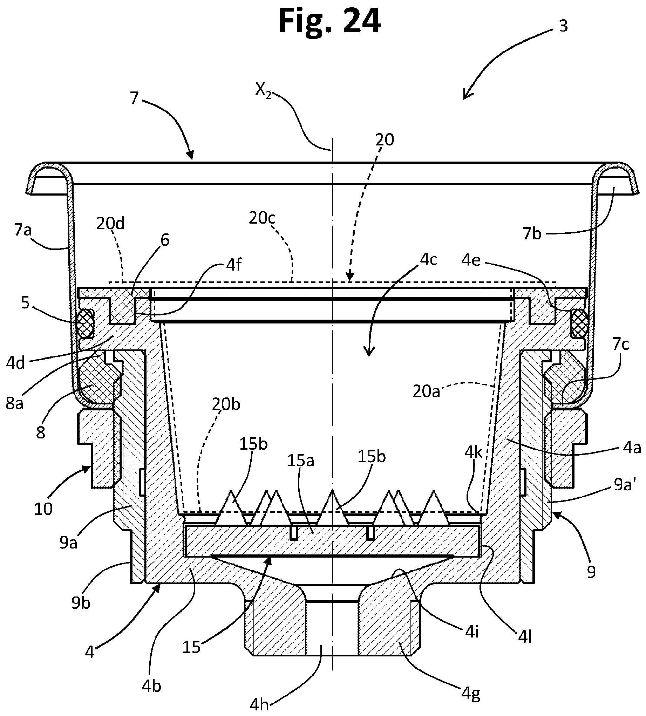

The supporting body 2 described so far can therefore be of an overall known conception: what distinguishes the capsule-holder 1 is the presence, in this supporting body 2, of the receiving assembly 3, which is shown in an assembled condition in figure 24, and components of which are shown individually in figures 3-23. As will be clear later, the assembly 3 has a respective central axis - indicated by X₂ in figure 24 - which, in the assembled condition, substantially coincides with the central axis X₁ of the supporting body 2.

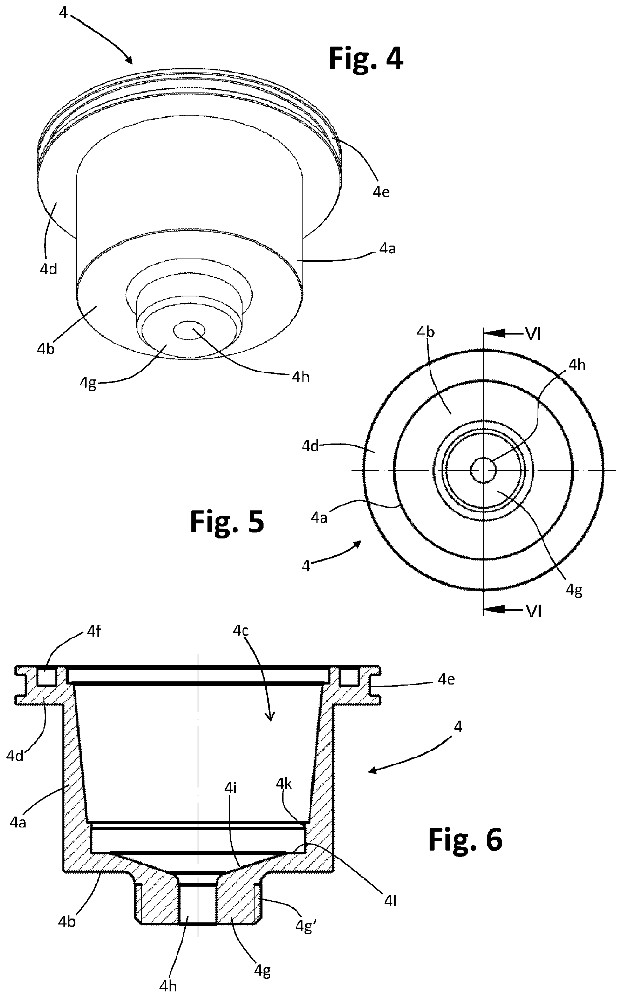

Referring initially to figures 4-6, the receiving assembly includes a cup-shaped container body, for example formed with metal material, having a peripheral wall 4a and a bottom 4b, which define a chamber 4c (figure 6) open above and able to receive a capsule 20. Preferably, the chamber 4c has an inner peripheral profile or surface that is at least partly complementary to that of the capsule 20, in particular to the profile of its side wall 20a.

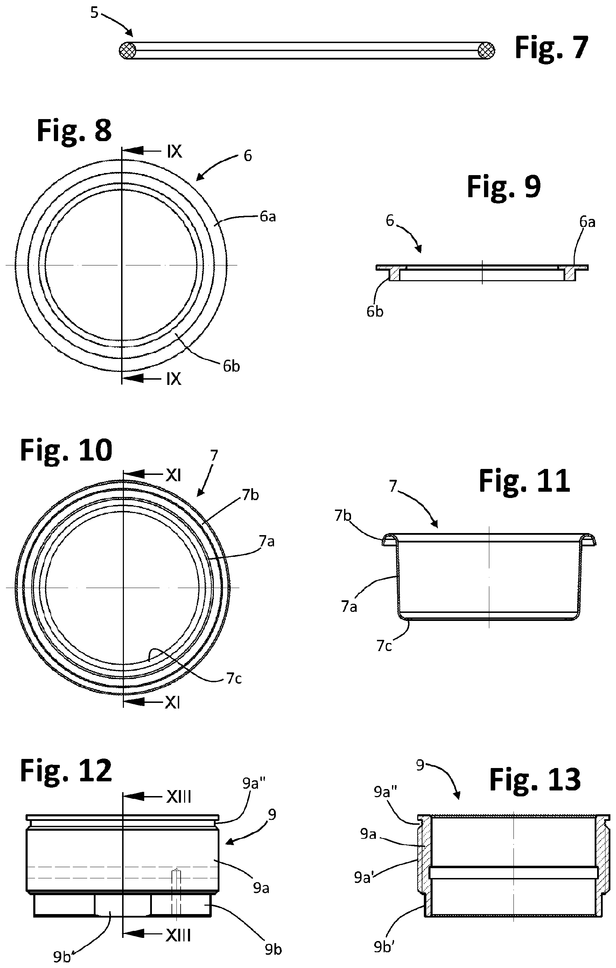

In various embodiments the container body 4 has, at one end opposite to the bottom 4b, a flange 4d that protrudes radially outwards from the wall 4a, this flange 4d having a peripheral face in which a seat 4e is defined for a first annular sealing element, indicated with 5 in figures 3 and 7. In various preferential embodiments, a second seat 4f is defined at an upper surface of the flange 4d, for a second annular sealing element, indicated as a whole with 6 in figures 3 and 8-9.

The bottom 4b of the container body 4 has at least one outlet duct. In various embodiments, the bottom 4b has a tubular cylindrical protrusion 4g, which is traversed axially by a terminal portion 4h of the aforementioned outlet duct, this terminal portion being connected to an overlying inlet portion 4i which is generally flared or funnel-shaped and defined in the bottom 4b. The cylindrical protrusion 4g may have an external thread, indicated with 4g' only in figure 6.

The aforementioned first sealing element 5, visible in figure 7, is preferably a radial sealing gasket, for example of the O-ring type, formed with elastomer material. The second sealing element 6, shown in figures 8-9, is a gasket for axial or front seal: in the example, the element 6 is a T-gasket, with a disc part 6a, intended to perform the seal, and an engagement part 6b, configured for insertion in the corresponding front seat 4f of the flange 4d of the container body 4. The sealing element 6 is also preferably formed by an elastomer material.

In various embodiments the receiving assembly 3 further comprises a tubular body, indicated by 7 in figures 3 and 10-11, for example formed from metal material. The tubular body 7 has a respective peripheral wall 7a substantially cylindrical, with an upper edge 7b and a lower edge 7c. In the example the upper edge 7a is bent - preferably having a substantially overturned U-shape - to protrude outwards of the tubular body 7, while the lower edge 7c is bent to protrude inwards of the body 7.

The tubular body 7 is intended to receive inside at least one upper portion of the container body 4, with a lower portion of the same that protrudes below, beyond the lower edge 7c, as is visible for example in figure 24. In the assembled condition, the sealing element 5 is operatively in contact with an inner surface of the peripheral wall 7a of the tubular body 7.

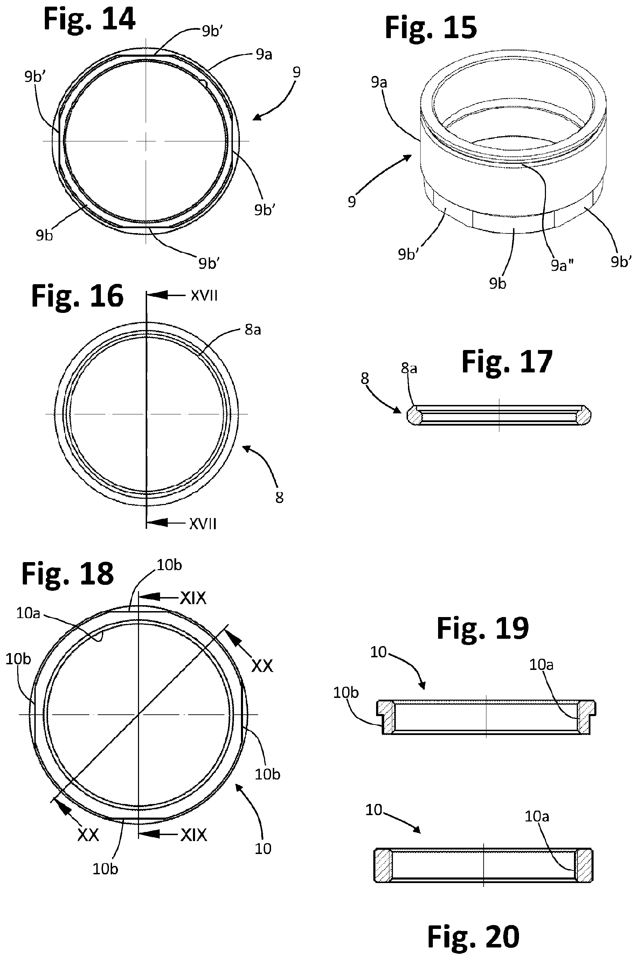

In various preferential embodiments, between the lower edge 7c of the peripheral wall 7a of the tubular body 7 and a lower face of the flange 4d of the container body, a further annular element can be operatively set, indicated as a whole with 8 in figures 16-17, for example a sealing element also formed in elastomer material.

In various embodiments the receiving assembly 3 further comprises a bushing or sleeve, indicated as a whole with 9 in figures 3 and 12-15, for example, formed in metal material. The sleeve 9 is substantially cylindrical and has an inner diameter substantially coinciding with the outer diameter of the side wall 4a of the container body 4, so that said sleeve 9 can be inserted on said side wall 4a, as is visible in figure 24.

In various embodiments the cylindrical wall of the sleeve 9 has an upper portion 9a externally provided with a thread, indicated with 9a' only in figure 13. Preferably, this upper portion 9a has a greater wall thickness than a lower portion 9b of the same sleeve 9, the latter having a reduced outer diameter.

Preferably, the lower portion 9b of sleeve 9 has pairs of flat surfaces 9b' in diametrically opposite positions, in order to facilitate assembling of the receiving assembly 3, using tools or equipment of known conception.

Also on a preferential basis, the upper portion 9a of the sleeve 9 has, near its upper edge, an outer annular throat 9a", suitable for cooperating with the possible further annular element 8, as explained below. Such an annular element 8, configured as a sealing element, is visible in figures 16 and 17: in this construction, the element 8 has a substantially circular section, but preferably has an upper lip 8a, in order to perform a seal also with respect to the lower face of the flange 4d of the container body 4, as is visible in figure 24.

In the assembled condition, as shown in figure 24, inside the tubular body 7 there extends also part of the sleeve 9, which at least partially surrounds the peripheral wall 4a of the container body 4, with the further annular element 8 which is operatively set also between the inner peripheral surface of the wall 7a of the tubular body 7 and a corresponding portion of the outer peripheral surface of the upper part 9a of the sleeve 9.

In various embodiments, on the external thread 9a' of the upper portion 9a of the sleeve 9a an annular locking member is screwed, indicated as a whole with 10 in figures 3 and 18-21, for example formed with metal material. The locking member 10 basically performs the function of a nut, and is provided for the purpose of an internal thread 10a, suitable for engagement with the external thread 9a' of the sleeve 9, and is externally provided with pairs of flat surfaces 10b in diametrically opposite positions, in order to facilitate assembling of the receiving assembly 3, using suitable tools or equipment of known conception.

As noted in figure 24, in the case of the exemplified embodiment, the sleeve 9 fitted on the container body 4 protrudes below the tubular body 7, and the locking member 10 is screwed on the thread 9a' of the sleeve 9, such that the lower edge 7c of the sleeve itself is pushed towards the lower face of the 4d flange of the container body 4, with the further annular element 8 interposed, here a sealing element. The outer annular throat indicated with 9a" in figures 12-15 can be advantageously provided to allow a certain lateral deformation of the sealing element 8, when it is pressed axially. As can be seen, therefore, in various preferential embodiments, the further annular element 8 exerts both a radial seal (between the inside of the tubular body 7 and the outside of the sleeve 9), and a seal in an axial direction (between the lower edge 7c of the tubular body 7 and the lower side of the flange 4d of the container body 4).

In preferential embodiments, the receiving assembly 3 is constrained within the supporting body 2, that, is within the axial through-cavity thereof as defined by the peripheral wall 2a, by simple mechanical interference, for example by means of the tubular body 7, the upper edge 7b of which has a larger diameter than the upper edge 2b (figure 3) of the supporting body 2. However, other ways of fixing the assembly 3 on the body 2 are not excluded.

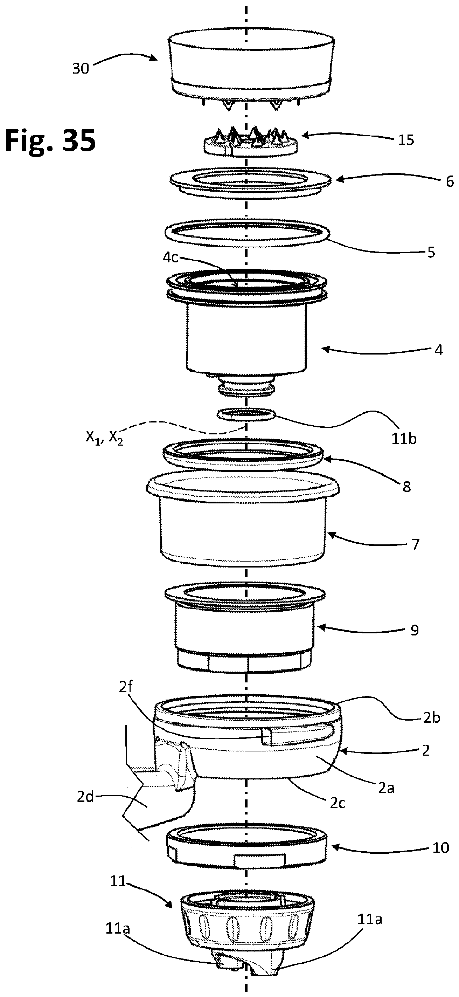

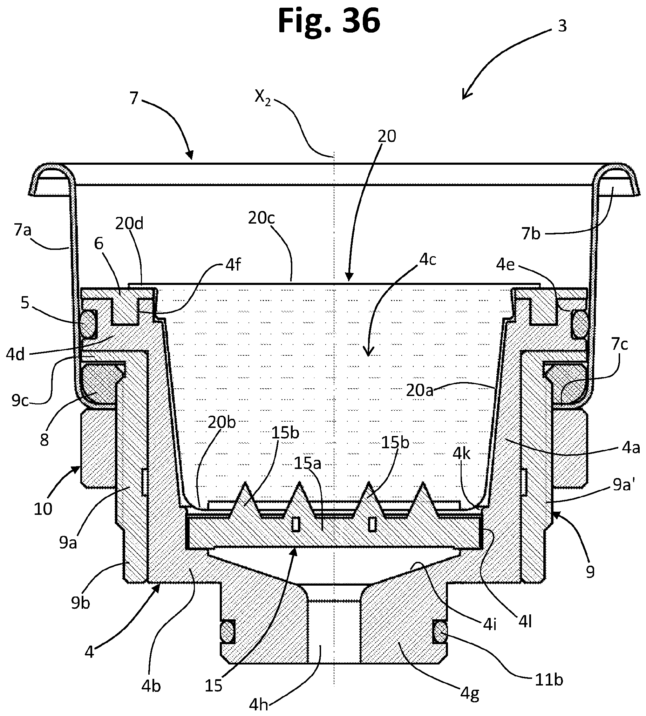

In the assembled condition, the tubular cylindrical protrusion 4g of the container body 4 also projects below the supporting body 2, and coupled thereto is a dispensing spout indicated as a whole with 11 in figures 1-3 - this spout having at least one respective outlet 11a - with possible interposition of a sealing ring, for example fitted in a corresponding seat of the protrusion 4g (similar to what is shown in figures 35 and 36, where one such sealing ring is designated by 11b). The coupling between the protrusion 4g and the spout 11 can for example be achieved using exploiting the external thread 4g' of figure 6, on which the spout 11 is screwed, which is provided with a corresponding female thread.

At the bottom 4b of the container body 4 there is provided a lower perforation arrangement, indicated as a whole with 15 in figure 3, which is configured to cause piercing of the outlet wall 20b of capsule 20 (figure 1), this perforation arrangement including a plurality of tips.

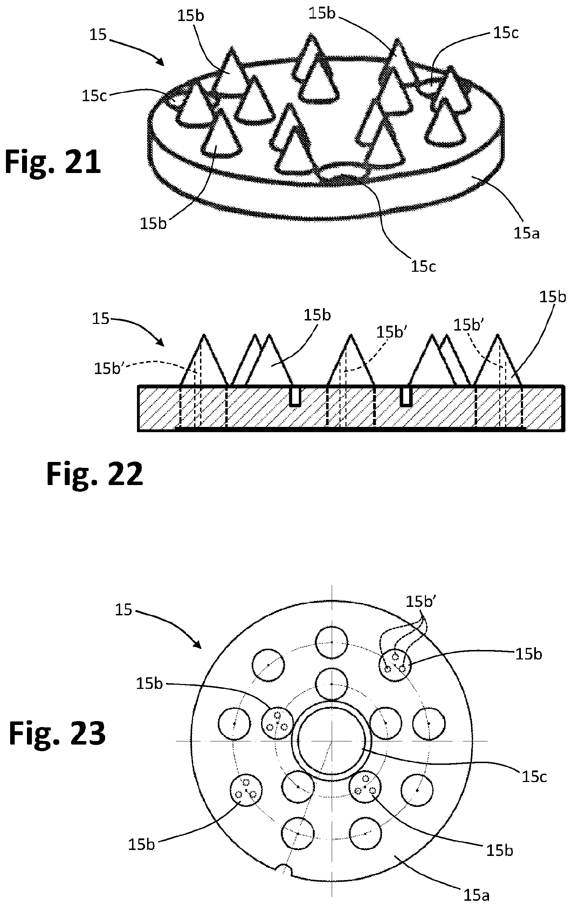

A possible embodiment of the perforation arrangement 15 is shown in Figures 21-23. This arrangement 15 includes a disk-shaped support 15a, for example, made of plastic, which bears a plurality of tips 15b upwardly protruding, for example, formed with metal material. The tips 15b are preferably arranged according to at least one circumference substantially concentric to the central axis (X₂, figure 24) of the receiving assembly 3, preferably according to at least two circumferences of different diameters, as exemplified in figure 23.

In various preferential embodiments, the tips 15b have at least one axial passage, as schematized in hatching in figure 22, with the reference 15b', for some of the tips. In embodiments of this type, the tips 15b can be designed to extend through the disk-shaped support 15a, so as to enable outflow of the beverage. A number of passages 15b' may be also provided in one and the same tip, as exemplified in hatching in figure 23 for some of the tips 15b, which in the example include three passages 15b' set substantial at 60° from each other.

In other embodiments, the tips 15b may be free of axial passages or grooves, and the disk-shaped support 15a has at least one through-opening; such a case is exemplified in figure 23, where a single through-opening 15c is provided for this purpose, in a central position of the disk-shaped support 15a, but in possible variants embodiments several openings 15c, of smaller diameter than in the case of figure 23, may be envisaged, defined on the support itself in eccentric positions: such a case is exemplified in figure 21.

Instead of axial passages, the tips 15b could also provide one or more surface grooves.

According to the invention, the disk-shaped support 15a is mounted in an angularly rotatable way inside the chamber 4c of the container body 4, in order to rotate about the central axis of the receiving assembly (X₂, figure 24). Referring for example to figure 6, in various preferential embodiments, inside the chamber 4c of the container body 4 a rotation seat is defined, indicated with 41, in which the disk-shaped support 15a is coupled or set in a rotatable way; as shown in figure 6, this seat 41 is at least partly defined in the inner peripheral surface of the chamber 4c, and has an outer peripheral profile substantially complementary to the outer peripheral profile of the disk-shaped support 15a, with a diameter slightly greater than it, in order to allow an easy rotation.

In various preferential embodiments, the receiving assembly 3 comprises constraint means, configured to prevent unwanted displacement of the disk-shaped support 15a in an axial direction of the same assembly. Referring again to figure 6, said constraint means may, for example, comprise a circumferential rib 4k of the inner peripheral surface of the chamber 4c. The rib 4k defines a diameter slightly smaller than the diameter of the seat 41 and the disk-shaped support 15a, such as to enable a substantially snap-in insertion of the support itself within the seat 41.

In the assembled condition of figure 24 the passage or passages 15b' of the tips 15b and/or the through-opening or openings 15c of the disk-shaped support 15a are facing at the flared portion 4i of the outlet duct of the container body 4, in order to allow an easy outflow of the beverage.

The capsule-holder 1 as previously described can be part of a kit designed to allow the use of capsules 20 on a beverage preparation machine equipped with a hot water dispensing unit. In various embodiments such a kit also comprises an upper piercing element, configured for mounting on a dispensing unit of the preparation machine.

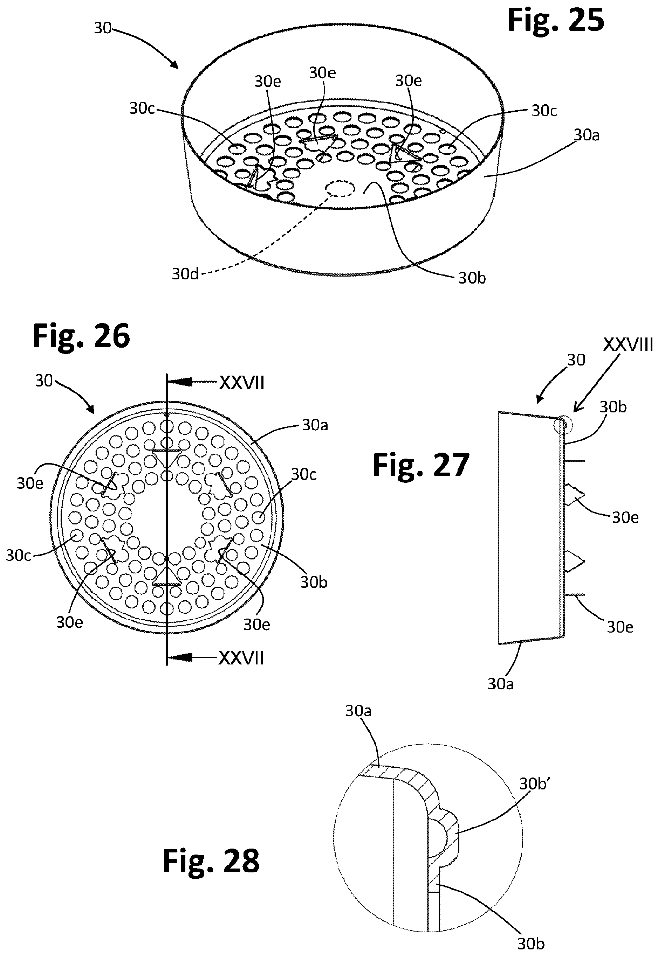

An example of such an upper piercing element, indicated as a whole with 30, is visible in Figure 3 and is represented in detail in Figures 25-28.

The element 30 has a respective cup body, for example formed with metal material, having a peripheral wall 30a and a bottom wall 30b. In various embodiments, the peripheral wall 30a, for example at least slightly truncated-cone shaped, is designed to surround at least partially a corresponding part of the dispensing unit, as explained below. The bottom wall 30b is provided with a plurality of through-openings 30c, for passage of the hot preparation water.

In various preferential embodiments, the element 30 is fixed to the machine by press fit or interlocking. and its bottom wall 30b is therefore not necessarily provided with fixing holes. However, in other embodiments, it is possible to envisage that the bottom wall 30b is provided with at least one fixing hole, such as the hole in the central position indicated with 30d in figure 25. The bottom wall 30b also has a plurality of blades or tips 30e protruding downwards. In various embodiments, the blades 30 are integrally defined by cutting and bending flaps of the bottom wall 30b, in particular after the openings 30b have been defined in that wall. In such embodiments, as noted in figure 27, the blades 30e have an at least an approximately triangular profile. The blades are preferably arranged substantially according to a circumference, and can have, for example, a thickness of between 0.2 and 0.4 mm, a height of between 5 and 6 mm, and a width of between 6 and 7 mm. The openings 30c do not necessarily all have the same diameter; for example, there can be provided first openings arranged in a ring, each with a diameter of between 3 and 4 mm, and second openings arranged in a ring, each having a diameter of between 2 and 3 mm.

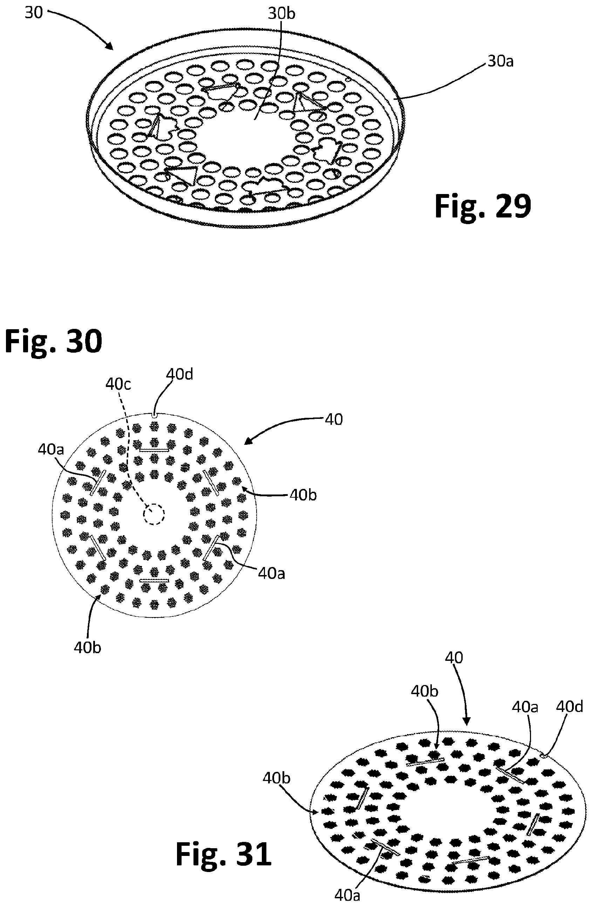

Note that the height of the peripheral wall 30a may vary depending on the type of dispensing member on which the element 30 is intended to be installed. Figure 29 shows, for example, a piercing element 30 similar to that of figures 25-28, but the peripheral wall 30a of which has a reduced height.

In various embodiments, the lower piercing element 30 is associated with a micro-perforated plate, which in use leans against the external side of the bottom wall 30b of the element 30. This micro-perforated plate defines a plurality of slits for the blades 30e and a plurality of fluidic passageways for the hot water.

An example of a micro-perforated plate is represented in figures 30-32. The plate, indicated with 40, has a thin circular body, preferably of metal material, for example having a thickness of between 0.2 and 0.4 mm, and a diameter substantially corresponding to the diameter of the lower wall 30b of the piercing element, for example of between 50 and 60 mm. In the plate 40 slits 40a are defined, through which the blades 30e of the upper piercing element 30 are received through, as well as a plurality of fluidic passageways 40b, preferably arranged according to respective circumferences and spatially separated from each other.

In various preferential embodiments, the plate 40 is secured in place by means of the element 30, which - as mentioned - can be fixed to the machine via press fit or interlocking. By the way, in other embodiments, the plate 40 may be provided with at least one fixing hole, such as the hole in the central position indicated with 40c in figure 30.

In various preferential embodiments, the number of passageways 40b corresponds to the "initial" number of openings 30c of the element 30, that is, the number of openings 30c defined in the wall 30b before the cutting and bending operations required for obtaining the blades 30e. In any event, preferably, the arrangement is such that, in the mounted condition, each passageway 40b is at a respective opening 30c of the element 30. For this purpose also, the plate element 40 preferably comprises a respective counter-element, intended to cooperate with a respective counter-element of the upper piercing element 30, for the purpose of correct positioning.

Referring to the example shown, the bottom wall 30b of the element 30 defines at least one counter- or positioning- element, indicated with 30b' in the detail of figure 28, consisting of a small boss 30b' protruding from the outer side of the bottom wall 30b, obtained near the peripheral wall 30a. On the other hand, the plate 40 defines, in a position corresponding to its external profile, a recess 40d, capable of receiving at least partially the aforementioned boss 30b'. In the assembled condition, with the two counter-elements 30b' and 40d coupled together (and obviously with the blades 30e passing through the corresponding slots 40a), the plate 40 leans against the outside of the bottom wall 30b of the piercing element 30, with each passageway 40b which is at a respective through-opening 30c.

In various preferential embodiments, and as is shown in the detail of figure 32, each passageway 40b is formed by a respective group of micro-openings 40b', these micro-openings each having a passage section lower than that of a respective opening 30b of the piercing element 30. Moreover, preferably, the sum of the passage sections of the micro-openings 40b' of each passageway 40b is also smaller than the passage section of the respective opening 30c.

Figure 33 exemplifies a part of a typical hot water supply unit of a beverage preparation machine, such as a bar machine or the like. The unit, indicated as a whole with 50, has a body defining a peripheral wall 51 with a lower edge 52 radially protruding inwards. In the edge 52 two insertion seats 53 are defined, each of which faces a ramp or cam 54 (only one visible), defined by an upper surface of the same edge 52. Within the area circumscribed by the peripheral wall 51 there is a water dispenser 55, here having an external profile which is substantially truncated-cone shaped, having a dispensing wall, substantially in the form of a shower plate, possibly but not necessarily provided with a central threaded hole 57. The dispenser 55 is connected to a pressurized hot water source of the preparation machine, according to a technique known in itself.

For the purpose of assembling, the upper piercing element 30, with the associated plate 40, is fitted on the dispenser 55, the element being secured in position via press fitting or interlocking: the assembled condition is schematized in figure 34. For the possible case in which the element 30 and the plate 40 have the hole 30d of figure 25 and the hole 40c of figure 30, and the dispensing wall of the dispenser 55 has the hole 57 of figure 34, a screw with a wide head (not represented) is inserted through the aforementioned holes 40c and 30d of the plate 40 and element 30, and screwed into the hole 57 of the dispenser 55, in order to fix in place the elements 30 and 40 on the dispenser.

In the use of the capsule-holder 1 described above, a user places a capsule 20 inside the chamber 4c of the container body 4, pushing it manually in depth, until causing piercing of the outlet wall 20b by the lower perforation arrangement 15, as exemplified in figure 24 (where the capsule 20 is represented in hatching). In this condition, the lower side of the flange 20d of the capsule 20 is leaning against, or anyway facing, the front sealing element 6 of the container body 4.

Subsequently, the operator couples the capsule-holder 1 of figure 1 to the dispensing unit 50 of figure 33, through the bayonet system. For this purpose, the operator axially translates the capsule-holder 1 upwards, so as to insert the pins 2f into the insertion seats 53 of the unit 50: in this phase the dispenser 55 provided with the piercing element 30 slips into the upper part of the tubular body 7 of the receiving assembly 3 containing the capsule 20, with the blades 30e of the element 30 that cause piercing of the inlet wall 20c of the capsule 20. Subsequently, the operator imparts an angular movement to the capsule-holder 1, so that the lower surface of the pins 2f slides on the inclined ramps 54 of the unit 50, thus causing a further slight rise of the capsule-holder 1, and its tightening with respect to the group 50. In this phase, even if the tips 15b of the lower perforation arrangement 15 have already penetrated through the outlet wall 20b of the capsule 20, the angular movement of the capsule-holder 1 does not cause torsions on the capsule itself, thanks to the possibility of rotation of the disk-shaped support 15a. During tightening, the further annular element 8 of the receiving assembly 3, here configured as a sealing element, can be compressed slightly in an axial direction, that is, it allows a slight elastic adaptation of the position of the container body 4 and the elements associated therewith with respect to the tubular body 7 and the dispenser 55.

In the tight condition of the capsule-holder 1 on the dispensing unit 50 the plate 40 is pressed against the inlet wall 20c of the capsule 20, with the lower surface of the flange 20d of the capsule that is pressed against the front sealing element 6 of the container body 4, ensuring the necessary seal.

During the subsequent dispensing, the hot water under pressure coming from the dispenser 55 passes through the openings 30c of the upper piercing element 30 and the corresponding passageways 40b of the plate 40; the sealing action exerted by the front sealing element 6 with respect to the flange 20d of the capsule 20 reduces the risk of any lateral leakage of the water flow, which can then penetrate under pressure into the capsule itself, through the ways defined between the blades 30e and the corresponding slots created by these blades in the inlet wall 20c of the capsule 20; any lateral leakage of water can in any case be contained by the radial sealing element 5 of the receiving assembly 3 and, if necessary, also by the further annular element 8, exemplified here as an axial-radial sealing element. Possible pressure losses due to possible leakage of the water are therefore avoided, or at least significantly reduced thanks to the various sealing means provided for.

The hot water under pressure then passes through the capsule 20, in contact with the precursor contained thereinto, and the resulting beverage can flow out through the passages 15b' of the tips 15b of the lower perforation arrangement 15, and/or through the ways defined between these tips 15b and the corresponding holes created by them in the outlet wall 20b of the capsule. The beverage leaving the capsule 20 then reaches the outlet duct 4i-4h (directly through the passageways 15b' of the tips 15b and/or, when provided, through the passage 15c of the plate element 15a) and flows through the spout 11 (figures 11-2) of capsule-holder 1, to an underlying container, such as a cup.

Figures 35 and 36 show a possible variant embodiment, largely similar to the one previously described with reference to Figures 3 and 24; in figure 36, the capsule 20 is schematically represented in section.

In the embodiment of figures 35-36 the further annular element 8, instead of being a sealing element in elastomer material, is configured as an element welded inside the tubular body 7, substantially at the corresponding lower edge 7c. Element 8 can be of metal material, for example, steel. In this embodiment, moreover, the sleeve 9 has, at its upper edge, a radially protruding flange, indicated with 9c in figure 36.

In this construction, presence of the further welded annular element 8 allows to strengthen the structure of the tubular body 7 in the lower area thereof, in view of the coupling obtained by screwing the locking member 10 on the sleeve 9, with the lower edge 7c of the same body 7 and the element 8 which are thus tightened between the flange 9c of the sleeve 9 and the locking member 10.

For the rest, operation and assembly of the device is the same as that already described, with the difference that in this case the element 8 does not strictly fulfil sealing functions.

The characteristics of the present invention are clear from the above description, as are its advantages.

It is clear that numerous variations are possible for the person skilled in the art to the capsule-holder device and the kit described as an example, without departing from the scope of the invention as defined by the claims that follow.

As previously mentioned, the assembly 3 can be fixed to the supporting body 2 by means other than a simple mechanical interference. For example, the lower portion 9b having a smaller diameter of the sleeve 9 can be provided with an external thread, on which a further locking member can be screwed, with this lower portion 9b that will have a smaller diameter than the lower edge 2c (figure 3) of the supporting body 2, and with the mentioned further locking member that will have a larger outer diameter than the lower edge 2c of the supporting body 2. In the assembled condition of the assembly 3 on the supporting body 2, therefore, the lower portion 9b of the sleeve 9 will be configured to protrude below beyond the lower edge 2c of the supporting body 2, and by tightening on its thread the further locking member it will be possible to axially block the receiving assembly 3 as a whole inside the supporting body 2, with the upper edge 7b of the tubular body 7 abutting on the upper edge 2b of the supporting body 2, and with the further locking member axially abutting on the lower edge 2c of the supporting body 2.

The sealing element 6 can have different thicknesses or heights, in particular of its part 6a, in order to enable to house in the chamber 4c of the body 4 capsules 20 having different height, meant herein as the distance in the axial direction between the walls 20b and 20c. In particular, in the case of use of higher capsules 20, a higher element 6 may be provided, or thicker in its head part 6a; vice versa, in the case of less high capsules 20, a less high element 6 may be used, or thinner in its head part 6a. The choice of the sealing element 6 therefore enable to adjust the height of the housing space represented by the chamber 4c.

The possibility of providing sealing elements 6 having different heights also enable to adjust the distance between the tips 15b and the used capsule 20, allowing to differentiate the pre-infusion time, that is, prolonging or decreasing the contact time of the extraction liquid with the precursor of the beverage contained in the capsule. For example, in the case of capsules containing soluble beverage precursors, it may be preferable for the tips 15b to penetrate the bottom 20b of the capsule 20 to a reduced extent, in order to slow down the passage of water through the capsule itself and thus allow a complete solubilization of the precursor; on the other hand, in the case of capsules containing coffee powder, the tips 15b can even penetrate to a greater extent through the bottom 20b of the capsule 20, as the necessary pre-infusion phase can be obtained in a relatively short time (on average about 5 seconds), and the subsequent dispensing phase must be relatively rapid (on average not exceeding about 25 seconds).

In various embodiments, therefore, the assembly 3 can be designed so as to enable replacement of the sealing element 6, in order to adapt the assembly according to the type of capsule to be treated. In other embodiments, on the other hand, a kit may be provided that includes a plurality of receiving assemblies 3, which are replaceable with respect to one and the same supporting body 2 and which are differentiated from each other for the type of sealing element 6, or a plurality of capsule-holder devices 1 can be envisaged, differentiated from each other by the type of sealing element 6 that equips the corresponding receiving assembly 3.

## Claims

1. A capsule-holder device for a beverage preparation machine, comprising an axially hollow annular supporting body (2) having a central axis (X₁), the supporting body (2) having a peripheral wall (2a) with an upper edge (2b) and a lower edge (2c), the peripheral wall (2a) of the supporting body (2) having a lateral attachment (2d) for fixing a handle (2e) and coupling means (2f), suitable for coupling with a hot-water dispensing unit (50) of the beverage preparation machine at least following an angular movement of the supporting body (2) about the respective central axis (X₁),
wherein within the supporting body (2) a receiving assembly (3) is mounted, having a respective central axis (X₂) substantially coinciding with the central axis (X₁) of the supporting body (2), the receiving assembly (3) including a cup-shaped container body (4) which has a respective peripheral wall (4a),
wherein the cup-shaped container body (4) has a bottom (4b), which defines with the peripheral wall thereof a chamber (4c) able to receive a capsule (20), the bottom (4b) of the container body (4) having at least one outlet duct (4h, 4i),
wherein at the bottom (4b) of the container body (4) a lower perforation arrangement (15) is provided, able to cause perforation of an outlet wall (20b) of a capsule (20) contained in the chamber (4c), the lower perforation arrangement (15) comprising a plurality of tips (15b), preferably arranged according to at least one circumference substantially concentric to the axis (X₂) of the receiving assembly (3),
wherein the tips (15b) are borne by a disk-shaped support (15a),
said capsule holder device being **characterized in that** the disk-shaped support (15a) is mounted in an angularly rotatable way inside the chamber (4c), for rotating about the central axis (X₂) of the receiving assembly (3).

2. The capsule-holder device according to Claim 1, wherein a rotation seat (4l) is defined within the chamber (4c), in which the disk-shaped support (15a) is rotatably coupled, the rotation seat (4l) being at least in part defined by an inner peripheral surface of the chamber (4c).

3. The capsule-holder device according to Claim 1 or Claim 2, further comprising constraining means (4k) configured for preventing unwanted displacements of the disk-shaped support (15a) in an axial direction of the receiving assembly (3).

4. The capsule-holder device according to Claim 3, wherein the constraining means (4k) comprise a circumferential rib of an inner peripheral surface of the chamber (4c).

5. The capsule-holder device according to any one of Claims 1-4, wherein:
- the tips (15b) have at least one axial passage or a surface groove, and/or the disk-shaped support (15a) has at least one through opening (15c), and
- the bottom (4b) of the container body (4) defines a generally flared portion (4i) of the outlet duct (4i, 4h) which extends below the disk-shaped support (15a).

6. The capsule-holder device according to any one of Claims 1-5, wherein the peripheral wall (4a) of the container body (4) has, at an end opposite to the bottom (4b), a flange (4d) protruding radially outwards, the flange (4d) having a peripheral face in which a seat (4e) is defined, for a first annular sealing element (5).

7. The capsule-holder device according to any one of Claims 1-5, wherein the peripheral wall (4a) of the container body (4) has, at an end opposite to the bottom (4b), a flange (4d) protruding radially outwards, the flange (4d) having an upper surface in which a seat (4f) is defined, for a respective annular sealing element (6).

8. The capsule-holder device according to any one of Claims 1-7, wherein the receiving assembly (3) comprises a tubular body (7) with a peripheral wall (7a) having an outwardly protruding upper edge (7b) and an inwardly protruding lower edge (7c), an upper portion of the container body (4) being housed in the tubular body (7).

9. The capsule-holder device according to Claims 6 and 8, wherein the first annular sealing element (5) is operatively in contact with an inner surface of the peripheral wall (7a) of the tubular body (7).

10. The capsule-holder device according to Claim 9, wherein the receiving assembly (3) further comprises a cylindrical sleeve (9) which at least partially surrounds the peripheral wall (4a) of the container body (4).

11. The capsule-holder device according to Claim 10, wherein between:
- the lower edge (7c) of the peripheral wall (7a) of the tubular body (7), and
- a lower face of one of the flange (4d) of the container body (4) and a flange (9c) of the cylindrical sleeve (9) which protrudes radially outwards,
an additional annular element (8) is set, the further annular element (8) being also set between an inner surface of the peripheral wall (7a) of the tubular body (7) and a corresponding outer peripheral surface of the cylindrical sleeve (9),
wherein preferably the cylindrical sleeve (9) has an upper external thread (9a') on which a first locking member (10) can be screwed, to urge the lower edge (7c) of the tubular body (7) towards the lower face of the flange (4d) of the container body (4) with the interposition of the further annular element (8).

12. The capsule-holder device according to any one of Claims 1-11, wherein the receiving assembly (3) is constrained into the supporting body (2) by mechanical interference.

13. A kit comprising at least one of:
- a capsule-holder device (1) according to Claim 7, and a plurality of said respective annular sealing elements (6) having different heights or thicknesses, which are replaceable with respect to the corresponding seat (4f) defined in the upper surface of the flange (4d) of the container body (4);
- a plurality of capsule-holder devices (1) according to Claim 7, differentiated from each other by the height or thickness of said respective annular sealing element (6);
- a capsule-holder device (1) according to Claim 7, and a plurality of said receiving assemblies (3), which are replaceable with respect to one and the same said supporting body (2) and which are differentiated from each other in terms of height or thickness of said corresponding annular sealing element (6).

14. A kit for using capsules on a beverage preparation machine equipped with a hot-water dispensing unit (50), the kit comprising a capsule-holder device (1) according to any one of Claims 1-12, configured for coupling with the hot-water dispensing unit (50), the kit further comprising an upper perforation element (30) configured for mounting on the hot-water dispensing unit (50), the upper perforation element (30) comprising a body having a respective peripheral wall (30a) and a bottom wall (30b), wherein the peripheral wall (30a) is shaped as to at least partially surround a corresponding part (55) of the hot-water dispensing unit (50), and the bottom (30b) defines a plurality of through openings (30c) and a plurality of downwardly protruding tips or blades (30e).

15. The kit according to claim 14, further comprising a micro-perforated plate (40), configured to be placed against an external side of the bottom wall (30b) of the upper perforation element (30), the micro-perforated plate (40) having a plurality of slots (40a), through which the downwardly protruding tips or blades (30e) of the upper perforation element (30) are receivable, and a plurality of fluidic passageways (40b) spatially separated from each other and formed each by a respective group of micro-openings (40b').

16. The kit according to Claim 14 or Claim 15, wherein the downwardly protruding tips or blades (30e) are defined by respective folded portions of the bottom wall (30b) of the upper perforation element (30), the downwardly protruding tips or blades (30e) being preferably arranged substantially along a circumference.

17. A beverage preparation machine, comprising a kit according to any one of Claims 13-16.

## Patentansprüche

1. Eine Kapselhaltervorrichtung für eine Getränkezubereitungsmaschine, umfassend einen axial hohlen ringförmigen Trägerkörper (2) mit einer Mittelachse (X₁), wobei der Trägerkörper (2) eine Umfangswand (2a) mit einer oberen Kante (2b) und einer unteren Kante (2c) aufweist, wobei die Umfangswand (2a) des Trägerkörpers (2) eine seitliche Befestigung (2d) zum Befestigen eines Griffs (2e) und Kupplungsmittel (2f) aufweist, die geeignet sind, um mit einer Heißwasserabgabeeinheit (50) der Getränkezubereitungsmaschine mindestens nach einer Winkelbewegung des Trägerkörpers (2) um die jeweilige Mittelachse (X₁) zu kuppeln,
wobei innerhalb des Trägerkörpers (2) eine Aufnahme-Baugruppe (3) montiert ist, die eine jeweilige Mittelachse (X₂) aufweist, die im Wesentlichen mit der Mittelachse (X₁) des Trägerkörpers (2) zusammenfällt, wobei die Aufnahme-Baugruppe (3) einen becherförmigen Behälterkörper (4) umfasst, der eine jeweilige Umfangswand (4a) aufweist,
wobei der becherförmige Behälterkörper (4) einen Boden (4b) hat, der mit seiner Umfangswand eine Kammer (4c) definiert, die eine Kapsel (20) aufnehmen kann, wobei der Boden (4b) des Behälterkörpers (4) mindestens einen Auslasskanal (4h, 4i) aufweist,
wobei am Boden (4b) des Behälterkörpers (4) eine untere Perforierungsanordnung (15) vorgesehen ist, die geeignet ist, eine Perforation einer Auslasswand (20b) einer in der Kammer (4c) enthaltenen Kapsel (20) zu bewirken, wobei die untere Perforierungsanordnung (15) eine Vielzahl von Spitzen (15b) umfasst, die vorzugsweise gemäß mindestens einem Umfang angeordnet sind, der im Wesentlichen konzentrisch zur Achse (X₂) der Aufnahme-Baugruppe (3) ist,
wobei die Spitzen (15b) von einer scheibenförmigen Stütze (15a) getragen werden,
wobei besagte Kapselhaltervorrichtung **dadurch gekennzeichnet ist, dass** die scheibenförmige Stütze (15a) innerhalb der Kammer (4c) winkeldrehbar montiert ist, um sich um die Mittelachse (X2) der Aufnahme-Baugruppe (3) zu drehen.

2. Die Kapselhaltervorrichtung nach Anspruch 1, wobei innerhalb der Kammer (4c) ein Drehsitz (41) definiert ist, in dem die scheibenförmige Stütze (15a) drehbar gekuppelt ist, wobei der Drehsitz (4l) mindestens teilweise durch eine innere Umfangsfläche der Kammer (4c) definiert ist.

3. Die Kapselhaltervorrichtung nach Anspruch 1 oder Anspruch 2, ferner umfassend Rückhaltemittel (4k), die konfiguriert sind, um unerwünschte Verschiebungen der scheibenförmigen Stütze (15a) in einer axialen Richtung der Aufnahme-Baugruppe (3) zu verhindern.

4. Die Kapselhaltervorrichtung nach Anspruch 3, wobei die Rückhaltemittel (4k) eine Umfangsrippe einer inneren Umfangsfläche der Kammer (4c) umfassen.

5. Die Kapselhaltervorrichtung nach einem der Ansprüche 1-4, wobei:
- die Spitzen (15b) mindestens einen axialen Durchgang oder eine Oberflächennut aufweisen, und/oder die scheibenförmige Stütze (15a) mindestens eine Durchgangsöffnung (15c) aufweist, und
- der Boden (4b) des Behälterkörpers (4) einen allgemein aufgeweiteten Abschnitt (4i) des Auslasskanals (4i, 4h) definiert, der sich unterhalb der scheibenförmigen Stütze (15a) erstreckt.

6. Die Kapselhaltervorrichtung nach einem der Ansprüche 1-5, wobei die Umfangswand (4a) des Behälterkörpers (4) an einem dem Boden (4b) gegenüberliegenden Ende einen radial nach außen ragenden Flansch (4d) aufweist, wobei der Flansch (4d) eine Umfangsfläche aufweist, in der ein Sitz (4e) für ein erstes ringförmiges Dichtelement (5) definiert ist.

7. Die Kapselhaltervorrichtung nach einem der Ansprüche 1-5, wobei die Umfangswand (4a) des Behälterkörpers (4) an einem dem Boden (4b) gegenüberliegenden Ende einen radial nach außen ragenden Flansch (4d) aufweist, wobei der Flansch (4d) eine obere Fläche aufweist, in der ein Sitz (4f) für ein jeweiliges ringförmiges Dichtelement (6) definiert ist.

8. Die Kapselhaltervorrichtung nach einem der Ansprüche 1-7, wobei die Aufnahme-Baugruppe (3) einen rohrförmigen Körper (7) mit einer Umfangswand (7a) umfasst, die eine nach außen ragende obere Kante (7b) und eine nach innen ragende untere Kante (7c) aufweist, wobei ein oberer Abschnitt des Behälterkörpers (4) in dem rohrförmigen Körper (7) untergebracht ist.

9. Die Kapselhaltervorrichtung nach den Ansprüchen 6 und 8, wobei das erste ringförmige Dichtelement (5) operativ in Kontakt mit einer Innenfläche der Umfangswand (7a) des rohrförmigen Körpers (7) steht.

10. Die Kapselhaltervorrichtung nach Anspruch 9, wobei die Aufnahme-Baugruppe (3) ferner eine zylindrische Hülse (9) umfasst, die die Umfangswand (4a) des Behälterkörpers (4) mindestens teilweise umgibt.

11. Die Kapselhaltervorrichtung nach Anspruch 10, wobei zwischen:
- der unteren Kante (7c) der Umfangswand (7a) des rohrförmigen Körpers (7), und
- einer unteren Fläche eines der beiden Flansche, nämlich des Flansches (4d) des Behälterkörpers (4) oder eines radial nach außen ragenden Flansches (9c) der zylindrischen Hülse (9),
ein zusätzliches ringförmiges Element (8) angeordnet ist, wobei das weitere ringförmige Element (8) auch zwischen einer Innenfläche der Umfangswand (7a) des rohrförmigen Körpers (7) und einer entsprechenden äußeren Umfangsfläche der zylindrischen Hülse (9) angeordnet ist,
wobei vorzugsweise die zylindrische Hülse (9) ein oberes Außengewinde (9a') aufweist, auf das ein erstes Verriegelungs-Bauteil (10) geschraubt werden kann, um die untere Kante (7c) des rohrförmigen Körpers (7) mit Zwischenschaltung des weiteren ringförmigen Elements (8) in Richtung der unteren Fläche des Flansches (4d) des Behälterkörpers (4) zu drücken.

12. Die Kapselhaltervorrichtung nach einem der Ansprüche 1-11, wobei die Aufnahme-Baugruppe (3) durch mechanische Interferenz im Trägerkörper (2) gehalten ist.

13. Ein Kit, umfassend mindestens eines von:
- einer Kapselhaltervorrichtung (1) nach Anspruch 7, und einer Vielzahl besagter jeweiliger ringförmiger Dichtelemente (6) mit unterschiedlichen Höhen oder Dicken, die in Bezug auf den entsprechenden Sitz (4f), der in der oberen Fläche des Flansches (4d) des Behälterkörpers (4) definiert ist, austauschbar sind;
- einer Vielzahl von Kapselhaltervorrichtungen (1) nach Anspruch 7, die sich voneinander durch die Höhe oder Dicke besagter jeweiliger ringförmiger Dichtelemente (6) unterscheiden;
- einer Kapselhaltervorrichtung (1) nach Anspruch 7 und einer Vielzahl besagter Aufnahme-Baugruppen (3), die in Bezug auf ein und denselben Trägerkörper (2) austauschbar sind und die sich voneinander hinsichtlich der Höhe oder Dicke ihres entsprechenden ringförmigen Dichtelements (6) unterscheiden.

14. Ein Kit zur Verwendung von Kapseln an einer Getränkezubereitungsmaschine, die mit einer Heißwasserabgabeeinheit (50) ausgestattet ist, wobei das Kit eine Kapselhaltervorrichtung (1) nach einem der Ansprüche 1-12 umfasst, die zum Kuppeln mit der Heißwasserabgabeeinheit (50) konfiguriert ist, wobei das Kit ferner ein oberes Perforierungselement (30) umfasst, das zum Montieren auf der Heißwasserabgabeeinheit (50) konfiguriert ist, wobei das obere Perforierungselement (30) einen Körper mit einer jeweiligen Umfangswand (30a) und einer Bodenwand (30b) umfasst, wobei die Umfangswand (30a) so geformt ist, dass sie einen entsprechenden Teil (55) der Heißwasserabgabeeinheit (50) mindestens teilweise umgibt, und der Boden (30b) eine Vielzahl von Durchgangsöffnungen (30c) und eine Vielzahl von nach unten ragenden Spitzen oder Klingen (30e) definiert.

15. Das Kit nach Anspruch 14, ferner umfassend eine mikroperforierte Platte (40), die konfiguriert ist, um gegen eine äußere Seite der Bodenwand (30b) des oberen Perforierungselements (30) platziert zu werden, wobei die mikroperforierte Platte (40) eine Vielzahl von Schlitzen (40a) aufweist, durch welche die nach unten ragenden Spitzen oder Klingen (30e) des oberen Perforierungselements (30) aufnehmbar sind, und eine Vielzahl von fluidischen Durchgängen (40b), die räumlich voneinander getrennt sind und jeweils durch eine jeweilige Gruppe von Mikroöffnungen (40b') gebildet werden.

16. Das Kit nach Anspruch 14 oder Anspruch 15, wobei die nach unten ragenden Spitzen oder Klingen (30e) durch jeweilige umgebogene Abschnitte der Bodenwand (30b) des oberen Perforierungselements (30) definiert sind, wobei die nach unten ragenden Spitzen oder Klingen (30e) vorzugsweise im Wesentlichen entlang eines Umfangs angeordnet sind.

17. Eine Getränkezubereitungsmaschine, umfassend ein Kit nach einem der Ansprüche 13-16.

## Revendications

1. Dispositif porte-capsule pour une machine de préparation de boissons, comprenant un corps de support annulaire axialement creux (2) ayant un axe central (X₁), le corps de support (2) ayant une paroi périphérique (2a) avec un bord supérieur (2b) et un bord inférieur (2c), la paroi périphérique (2a) du corps de support (2) ayant une attache latérale (2d) pour fixer une poignée (2e) et des moyens de couplage (2f), adaptés pour un couplage avec une unité de distribution d'eau chaude (50) de la machine de préparation de boissons au moins suite à un mouvement angulaire du corps de support (2) autour de l'axe central respectif (X₁),
dans lequel à l'intérieur du corps de support (2) est monté un ensemble de réception (3), ayant un axe central respectif (X₂) coïncidant sensiblement avec l'axe central (X₁) du corps de support (2), l'ensemble de réception (3) incluant un corps conteneur en forme de tasse (4) qui a une paroi périphérique respective (4a),
dans lequel le corps conteneur en forme de tasse (4) a un fond (4b), qui définit avec sa paroi périphérique une chambre (4c) capable de recevoir une capsule (20), le fond (4b) du corps conteneur (4) ayant au moins un conduit de sortie (4h, 4i),
dans lequel au fond (4b) du corps conteneur (4) est prévu un ensemble de perforation inférieur (15), capable de provoquer la perforation d'une paroi de sortie (20b) d'une capsule (20) contenue dans la chambre (4c), l'ensemble de perforation inférieur (15) comprenant une pluralité de pointes (15b), de préférence disposées selon au moins une circonférence sensiblement concentrique à l'axe (X₂) de l'ensemble de réception (3),
dans lequel les pointes (15b) sont portées par un support en forme de disque (15a),
ledit dispositif porte-capsule étant **caractérisé en ce que** le support en forme de disque (15a) est monté à l'intérieur de la chambre (4c) de manière à pouvoir tourner angulairement, pour tourner autour de l'axe central (X₂) de l'ensemble de réception (3).

2. Dispositif porte-capsule selon la revendication 1, dans lequel un siège de rotation (41) est défini à l'intérieur de la chambre (4c), dans lequel le support en forme de disque (15a) est accouplé en rotation, le siège de rotation (4l) étant au moins en partie défini par une surface périphérique interne de la chambre (4c).

3. Dispositif porte-capsule selon la revendication 1 ou la revendication 2, comprenant en outre des moyens de retenue (4k) configurés pour empêcher des déplacements non désirés du support en forme de disque (15a) dans une direction axiale de l'ensemble de réception (3).

4. Dispositif porte-capsule selon la revendication 3, dans lequel les moyens de retenue (4k) comprennent une nervure circonférentielle d'une surface périphérique interne de la chambre (4c).

5. Dispositif porte-capsule selon l'une quelconque des revendications 1 à 4, dans lequel :
- les pointes (15b) ont au moins un passage axial ou une rainure de surface, et/ou le support en forme de disque (15a) a au moins une ouverture traversante (15c), et
- le fond (4b) du corps conteneur (4) définit une partie généralement évasée (4i) du conduit de sortie (4i, 4h) qui s'étend en dessous du support en forme de disque (15a).

6. Dispositif porte-capsule selon l'une quelconque des revendications 1 à 5, dans lequel la paroi périphérique (4a) du corps conteneur (4) a, à une extrémité opposée au fond (4b), une bride (4d) faisant saillie radialement vers l'extérieur, la bride (4d) ayant une face périphérique dans laquelle un siège (4e) est défini, pour un premier élément d'étanchéité annulaire (5).

7. Dispositif porte-capsule selon l'une quelconque des revendications 1 à 5, dans lequel la paroi périphérique (4a) du corps conteneur (4) a, à une extrémité opposée au fond (4b), une bride (4d) faisant saillie radialement vers l'extérieur, la bride (4d) ayant une surface supérieure dans laquelle un siège (4f) est défini, pour un élément d'étanchéité annulaire respectif (6).

8. Dispositif porte-capsule selon l'une quelconque des revendications 1 à 7, dans lequel l'ensemble de réception (3) comprend un corps tubulaire (7) avec une paroi périphérique (7a) ayant un bord supérieur (7b) faisant saillie vers l'extérieur et un bord inférieur (7c) faisant saillie vers l'intérieur, une partie supérieure du corps conteneur (4) étant logée dans le corps tubulaire (7).

9. Dispositif porte-capsule selon les revendications 6 et 8, dans lequel le premier élément d'étanchéité annulaire (5) est opérationnellement en contact avec une surface interne de la paroi périphérique (7a) du corps tubulaire (7).

10. Dispositif porte-capsule selon la revendication 9, dans lequel l'ensemble de réception (3) comprend en outre un manchon cylindrique (9) qui entoure au moins partiellement la paroi périphérique (4a) du corps conteneur (4).

11. Dispositif porte-capsule selon la revendication 10, dans lequel entre :
- le bord inférieur (7c) de la paroi périphérique (7a) du corps tubulaire (7), et
- une face inférieure de l'une de la bride (4d) du corps conteneur (4) et d'une bride (9c) du manchon cylindrique (9) qui fait saillie radialement vers l'extérieur,
un élément annulaire supplémentaire (8) est placé, l'élément annulaire (8) supplémentaire étant également placé entre une surface interne de la paroi périphérique (7a) du corps tubulaire (7) et une surface périphérique externe correspondante du manchon cylindrique (9),
dans lequel de préférence le manchon cylindrique (9) a un filetage externe supérieur (9a') sur lequel un premier élément de verrouillage (10) peut être vissé, afin de pousser le bord inférieur (7c) du corps tubulaire (7) vers la face inférieure de la bride (4d) du corps conteneur (4) avec l'interposition de l'élément annulaire supplémentaire (8).

12. Dispositif porte-capsule selon l'une quelconque des revendications 1 à 11, dans lequel l'ensemble de réception (3) est retenu dans le corps de support (2) par interférence mécanique.

13. Un kit comprenant au moins l'un des éléments suivants :
- un dispositif porte-capsule (1) selon la revendication 7, et une pluralité desdits éléments d'étanchéité annulaires respectifs (6) ayant différentes hauteurs ou épaisseurs, qui sont remplaçables par rapport au siège correspondant (4f) défini dans la surface supérieure de la bride (4d) du corps conteneur (4) ;
- une pluralité de dispositifs porte-capsule (1) selon la revendication 7, différenciés les uns des autres par la hauteur ou l'épaisseur dudit élément d'étanchéité annulaire respectif (6) ;
- un dispositif porte-capsule (1) selon la revendication 7, et une pluralité desdits ensembles de réception (3), qui sont remplaçables par rapport à un seul et même ledit corps de support (2) et qui sont différenciés les uns des autres en termes de hauteur ou d'épaisseur dudit élément d'étanchéité annulaire correspondant (6).

14. Un kit pour l'utilisation de capsules sur une machine de préparation de boissons équipée d'une unité de distribution d'eau chaude (50), le kit comprenant un dispositif porte-capsule (1) selon l'une quelconque des revendications 1 à 12, configuré pour être couplé à l'unité de distribution d'eau chaude (50), le kit comprenant en outre un élément de perforation supérieur (30) configuré pour être monté sur l'unité de distribution d'eau chaude (50), l'élément de perforation supérieur (30) comprenant un corps ayant une paroi périphérique respective (30a) et une paroi de fond (30b), dans lequel la paroi périphérique (30a) est façonnée de manière à entourer au moins partiellement une partie correspondante (55) de l'unité de distribution d'eau chaude (50), et le fond (30b) définit une pluralité d'ouvertures traversantes (30c) et une pluralité de pointes ou lames (30e) faisant saillie vers le bas.

15. Le kit selon la revendication 14, comprenant en outre une plaque micro-perforée (40), configurée pour être placée contre un côté externe de la paroi de fond (30b) de l'élément de perforation supérieur (30), la plaque micro-perforée (40) ayant une pluralité de fentes (40a), à travers lesquelles les pointes ou lames (30e) faisant saillie vers le bas de l'élément de perforation supérieur (30) peuvent être reçues, et une pluralité de passages fluidiques (40b) spatialement séparés les uns des autres et formés chacun par un groupe respectif de micro-ouvertures (40b').

16. Le kit selon la revendication 14 ou la revendication 15, dans lequel les pointes ou lames (30e) faisant saillie vers le bas sont définies par des parties pliées respectives de la paroi de fond (30b) de l'élément de perforation supérieur (30), les pointes ou lames (30e) faisant saillie vers le bas étant de préférence disposées sensiblement le long d'une circonférence.

17. Machine de préparation de boissons, comprenant un kit selon l'une quelconque des revendications 13 à 16.
